# EUROPÄISCHE PATENTSCHRIFT

(11) **EP 1 691 965 B1**
(45) Veröffentlichungstag und Bekanntmachung des Hinweises auf die Patenterteilung: **21.03.2007**
(21) Anmeldenummer: 04803738.6
(22) Anmeldetag: 10.12.2004
(51) Int. Cl.: B29C 47/68

(54) **SCHMELZEFILTER FÜR DIE REINIGUNG VON KUNSTSTOFFSCHMELZEN**
MELT FILTER FOR PURIFYING PLASTIC MELTS
FILTRE DE MATIERES EN FUSION POUR PURIFIER DES MATIERES PLASTIQUES EN FUSION

(30) Priorität: 12.12.2003 DE 10358672
(43) Veröffentlichungstag der Anmeldung: 23.08.2006
(73) Patentinhaber: GNEUSS KUNSTSTOFFTECHNIK GmbH, D-32549 Bad Oeynhausen (DE)
(72) Erfinder: GNEUSS, Stephan, 32547 Bad Oeynhausen (DE); GNEUSS, Daniel, Charlotte, NC 28277 (US)
(74) Vertreter: Grosse, Wolf-Dietrich Rüdiger
(86) Internationale Anmeldenummer: PCT/EP2004/014093
(87) Internationale Veröffentlichungsnummer: WO 2005/056273

(56) Entgegenhaltungen:
- DE-C1- 4 235 523
- US-A1- 2003 230 527

## Beschreibung

Die Erfindung betrifft einen Schmelzefilter für die Reinigung von insbesondere von Extrudern abgegebenen Kunststoffschmelzen, mit einer zwischen zwei ein mit einer Filterelement-Wechselstation ausgestatteten Gehäuse bildenden Platinen mittels eines kraftbetriebenen Klinkenantriebes drehantreibbar vorgesehenen Siebscheibe, die entlang einer Kreisbahn durch Stege getrennte Ausnehmungen zur Aufnahme austauschbarer Filterelemente aufweist, die vermittels von Lochscheiben gegen die infolge des in ihnen auftretenden Druckabfalls in Fließrichtung der Kunststoffschmelze auftretenden Kräfte abgestützt sind, und mit einem die Platinen im Bereich der Kreisbahn durchstoßenden, die Filterelemente mit Schmelze beaufschlagenden, sich zu den Filterelementen hin erweiternden Schmelzkanal.

Schmelzefilter gehören z. B. durch die EP 0 114 651 B1 zum Stand der Technik. Der bekannte Schmelzefilter weist jedoch eine sehr große und damit teure Siebscheibe auf, deren Filterelement-Wechselstation ebenfalls sehr groß ist und deren angeströmte Fläche der Siebscheibe dagegen sehr klein ist, so dass sich ein äußerst schlechter Wirkungsgrad ergibt. Die EP 0 569 866 A1 schlägt zwar bereits vor, den Schmelzekanal zu den Filterelementen hin zu erweitern, so dass zwei Filterelemente gleichzeitig durch die zu filternde Schmelze anströmbar sind. Aber auch hier werden noch große Bereiche der Filterelemente nicht angeströmt, so dass sich ein ähnlich schlechter Wirkungsgrad ergibt.

Hinzu kommt, dass die Klinken an der Siebscheibe eine verhältnismäßig große Teilung aufweisen, so dass beim Weiterdrehen der Siebscheibe große Flächen der verschmutzten Filterelemente gegen entsprechend große Flächen unverschmutzter Filterelemente ausgetauscht werden. Dadurch entstehen in der gereinigten Schmelze Druckunterschiede, die bei einer Weiterverarbeitung der

Schmelze nicht hingenommen werden können, so dass oft weitere Pumpen benötigt werden, um eine Druckkonstanz der gereinigten Schmelze zu gewährleisten.

Es wurde schon vorgeschlagen, anstelle des robusten, preisgünstigen Klinkenantriebes aufwendige, kleinere Schritte bewirkende Zahnradantriebe vorzusehen, um jeweils nur kleine Siebscheibenbereiche mit verschmutzten Filterelementen gegen Siebscheibenbereiche mit sauberen Filterelementen auszutauschen, und damit eine Druckkonstanz zu gewährleisten. Derartig aufwendige Drehantriebe stellen jedoch einen immensen Kostenfaktor dar.

Die DE 42 12 928 A1 offenbart zwar bereits eine großflächigere Abdeckung einer Siebscheibe, es werden jedoch immer noch große Bereiche der Siebscheibe beim Drehen derselben der Umgebungsluft ausgesetzt, so dass sich ungewollte Veränderungen im Kunststoff ergeben können.

Die US 2003/0330527 beschreibt einen Schmelzefilter gemäß des Oberbegriffs nach Anspruch 1.

Der Erfindung liegt die Aufgabe zugrunde, einen möglichst kleinen Schmelzefilter aufzuzeigen, bei dem sich im Betrieb kaum ungewollte Veränderungen im Kunststoff ergeben, der auch bei hohen Drücken einen Filterelementaustausch bei annähern der Druckkonstanz gewährleistet und der dennoch kostengünstig zu erstehen ist.

Dazu wird vorgeschlagen, dass die Platinen die Siebscheibe vollends abdecken, wobei mindestens eine der Platinen durch die Filterelement-Wechselstation unterbrochen ist, und dass die Filterelement-Wechselstation größer als ein Filterelement und kleiner oder gleich der Größe zweier Filterelemente ausgebildet ist. Damit wird ein möglichst die ganze Siebscheibe umschließendes Gehäuse gebildet, welches in der Lage ist, besser den hohen geforderten Drücken standzuhalten.

Es hat sich bewährt, dass mindestens eine der Platinen einen reversibel beweglichen, die Filterelement-Wechselstation abdeckenden Bereich aufweist, dass die Siebscheibe während des Filterbetriebs vollends abgedeckt und zur Siebscheibe bündig geschlossen ist, und dass für den während des Filterbetriebs durchzuführenden Filterelement-Wechsel die Filterelement-Wechselstation freigelegt ist. Durch die vollständige Abdeckung der Siebscheibe lassen sich einerseits höhere Drücke verwirklichen, andererseits ist gewährleistet, dass während des Betriebs keine an der Siebscheibe haftende Kunststoffschmelze mit der Umgebungsluft in Verbindung gerät.

Von Vorteil ist, dass der jeweilige Abstand zwischen angeströmten Filterelementen und der Filterelement-Wechselstation größer oder gleich der Breitenausdehnung eines Filterelementes sowie eines Steges und kleiner als die Breitenausdehnung zweiter Filterelemente sowie eines Steges ist. Dadurch ist gewährleistet, dass bei möglichst kleiner Filterelement-Wechselstation die möglichst größte Fläche der Siebscheibe von Schmelze angeströmt wird, ohne das Schmelze aus der Filterelement-Wechselstation herausgepresst werden kann.

Durch diese optimalen Verhältnisse zwischen der Größe der Filterelement-Wechselstation und der angeströmten Fläche der Siebscheibe kann diese kleiner bauen als die Siebscheiben nach dem Stand der Technik und dennoch eine größere wirksame Siebfläche zur Verfügung stellen.

Von Vorteil ist, wenn das Verhältnis der angeströmten Stegfläche zur durchströmten Fläche der Siebscheibe kleiner als 18 % und größer als 12 % ist. Dadurch wird gewährleistet, dass die Stege derartige Abmessungen erhalten, dass sie zwar den großen Drücken noch standhalten können, jedoch der zu filternden Schmelze möglichst kleine zur Filtrierung nicht heranziebare Flächen entgegensetzen, so dass die größtmögliche Filterfläche zur Wirkung kommen kann. Es hat sich dabei bewährt, dass das Verhältnis der angeströmten Stegfläche zur durchströmten Fläche 15±1 % beträgt.

Um eine Druckkonstanz beim Filterwechsel garantieren zu können, ist es zweckmäßig, dass pro Hub des Klinkenantriebes maximal 10 % der von der Kunststoffschmelze angeströmten Fläche der Siebscheibe gegen entsprechende Siebscheibenflächen mit unverbrauchten Filterelementen austauschbar ist. Dabei hat sich bewährt, dass pro Hub des Klinkenantriebs 6±1 % der Filterfläche austauschbar ist. Der Austausch von maximal 10 % von der Kunststoffschmelze angeströmten Fläche der Siebscheibe, d. h. der Filterelemente und der Stege gewährleistet, dass in der gereinigten Schmelze eine annähernde Druckkonstanz gegeben ist, die ein problemloses Weiterverarbeiten der Schmelze in nachgeordneten Maschinen erlaubt.

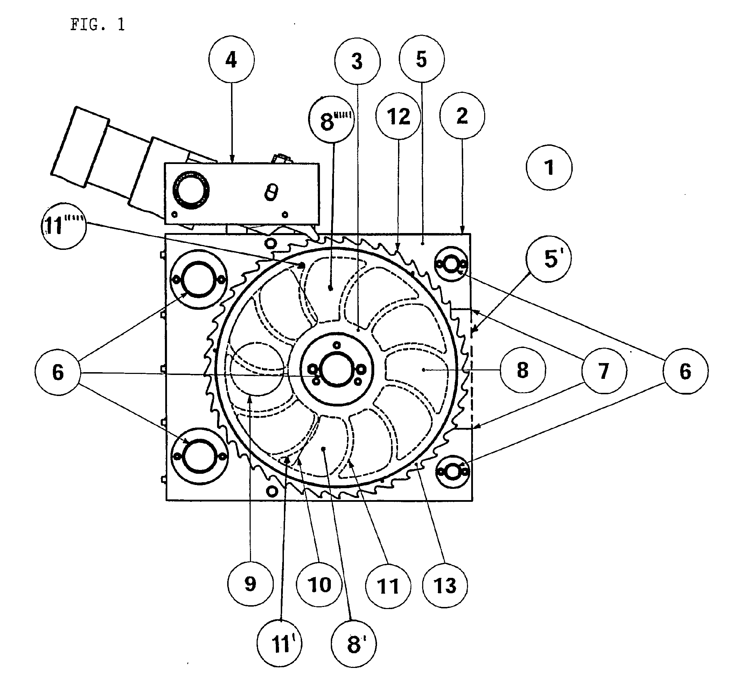

Die Erfindung wird anhand einer Zeichnung näher erläutert. Die Figur zeigt einen Schmelzefilter 1, der aus einem Gehäuse 2, einer Siebscheibe 3 sowie einem Klinkenantrieb 4 besteht. Das Gehäuse 2 wird von einer Platine 5 gebildet, welche über Verbindungselemente 6 mit einer in ihren Umrissen gestrichelt dargestellten weiteren Platine 5' verbunden sind. Die Platinen 5, 5' schließen zwischen sich die Siebscheibe 3 ein. In der Platine 5 ist eine Filterelement-Wechselstation 7 gezeigt, die im Wesentlichen der Größe eines Filterelementes 8 entspricht. Weiterhin weist die Platine 5 einen Schmelzekanal 9 auf, der sich zur Siebscheibe 3 hin in Form eines Ringsegmentes 10 aufweitet.

Die Siebscheibe 3 weist neben den Filterelementen 8 Stege 11 auf. Am Umfang der Siebscheibe sind Klinken 12 angeordnet, die mit dem Klinkenantrieb 4 zusammenarbeiten. Ein Kranz 13 verbindet die Stege 11 miteinander.

Dadurch, dass die Filterelement-Wechselstation 7 möglichst klein gewählt wird, kann von den Platinen 5 ein Großteil der Siebscheibe 3 umschlossen werden. Damit kann ein möglichst großer, im Schmelzekanal anstehender Druck verarbeitet werden, ohne dass es zu einem Verklemmen der Siebscheibe 3 im Gehäuse 2 kommt. Die Stege 11 sowie der umlaufende Kranz 13 der Siebscheibe 3 liegen auf den Platinen 5, 5' auf und dichten den Schmelzekanal 9 sowie das Ringsegment 10 nach außen hin ab.

Das Ringsegment 10 überspannt dabei die Stege 11' bis 11""' sowie die Filterelemente 8' bis 8""". Dabei wird durch die erfindungsgemäßen Verhältnisse zwischen der Größe der Anströmfläche zum Abstand zur Filterelement-Wechselstation und der Größen der Filterelement-Wechselstation ein optimalen Verhältnis erreicht, so dass auch bei einer kleinen Siebscheibe 3 bei großen Drücken die Schmelze optimal bei guter Druckkonstanz gefiltert werden kann.

### Bezugszeichenübersicht

- 1.: Schmelzefilter
- 2.: Gehäuse
- 3.: Siebscheibe
- 4.: Klinkenantrieb
- 5.: Platine
- 6.: Verbindungselement
- 7.: Filterelement-Wechselstation
- 8.: Filterelement
- 9.: Schmelzekanal
- 10.: Ringsegment
- 11.: Stege
- 12.: Klinke
- 13.: Kranz

## Patentansprüche

1. Schmelzefilter (1) für die Reinigung von insbesondere von Extrudern abgegebenen Kunststoffschmelzen, mit einer zwischen zwei ein mit einer Filterelement-Wechselstation (7) ausgestatteten Gehäuse bildenden Platinen (5, 5') mittels eines kraftbetriebenen Klinkenantriebes (4) drehantreibbar vorgesehenen Siebscheibe (3), die entlang einer Kreisbahn durch Stege (11) getrennte Ausnehmungen zur Aufnahme austauschbarer Filterelemente (8) aufweist, die vermittels von Lochscheiben gegen die infolge des in ihnen auftretenden Druckabfalls in Fließrichtung der Kunststoffschmelze auftretenden Kräfte abgestützt sind, und mit einem die Platinen (5, 5') im Bereich der Kreisbahn durchstoßenden, die Filterelemente (8) mit Schmelze beaufschlagenden, sich zu den Filterelementen (8) hin erweiternden Schmelzkanal (9),
**dadurch gekennzeichnet,**
**dass** die Platinen (5, 5') die Siebscheibe (3) vollends abdecken, wobei mindestens eine der Platinen (5, 5') durch die Filterelement-Wechselstation (7) unterbrochen ist, und dass die Filterelement-Wechselstation (7) größer als ein Filterelement (8) und kleiner oder gleich der Größe zweier Filterelemente (8, 8') ausgebildet ist.

2. Schmelzefilter nach Anspruch 1,
**dadurch gekennzeichnet,**
**dass** mindestens eine der Platinen (5, 5') einen reversibel beweglichen, die Filterelement-Wechselstation (7) abdeckenden Bereich aufweist, dass die Siebscheibe (3) während des Filterbetriebs vollends abgedeckt und zu Siebscheibe hin bündig geschlossen ist, und dass für den Filterelement-Wechsel die Filterelement-Wechselstation (7) freigelegt ist.

3. Schmelzefilter nach Anspruch 1 oder 2,
**dadurch gekennzeichnet,**
**dass** der jeweilige Abstand zwischen angeströmten Filterelementen (8) und der Filterelement-Wechselstation (7) größer oder gleich der Breitenausdehnung eines Filterelementes (8) sowie eines Steges (11) und kleiner als die Breitenausdehnung zweier Filterelemente (8, 8') sowie eines Steges (11) ist.

4. Schmelzefilter nach Anspruch 3,
**dadurch gekennzeichnet,**
**dass** das Verhältnis der angestömten Stegfläche zur durchströmten Fläche der Siebscheibe (3) kleiner als 18 % und größer als 12 % ist.

5. Schmelzefilter nach Anspruch 4,
**dadurch gekennzeichnet,**
**dass** das Verhältnis der angestömten Stegfläche zur durchströmten Fläche der Siebscheibe (3) zwischen 14% und 16% liegt.

6. Schmelzefilter nach mindestens einem der Ansprüche 3 bis 5,
**dadurch gekennzeichnet,**
**dass** pro Hub des Klinkenantriebes (4) maximal 10 % der von der Kunststoffschmelze angeströmten Fläche der Siebscheibe (3) gegen eine entsprechende Siebscheibenfläche mit unverbrauchten Filterelementen (8) austauschbar ist.

7. Schmelzefilter nach Anspruch 6,
**dadurch gekennzeichnet,**
**dass** pro Hub des Klinkenantriebes (4) zwischen 5% und 7% der von der Kunststoffschmelze angeströmten Fläche der Siebscheibe (3) gegen eine entsprechende Siebscheibenfläche mit unverbrauchten Filterelementen (8) austauschbar ist.

## Claims

1. A molten materials filter (1) for removing contaminants particularly from molten plastic materials exiting extruders, having a strainer plate (3) that is rotatable via a power-operated ratchet drive (4) and is situated between two plates (5, 5') forming a housing equipped with a filter element changing station (7), the straining plate also being furnished with cutouts separated by fins around the circumference thereof, which cutouts accommodate exchangeable filter elements (8), which are braced by a breaker plate against the forces arising in the direction of flow of the molten plastic material due to the loss of pressure occurring in the elements, and with a canal (9) for the molten material that passes through the plates (5, 5') in the area of the circumference thereof and loads the filter elements (8) with molten material, and is flared towards the filter elements (8), **characterised in that** the plates (5, 5') completely cover the strainer plate (3), wherein at least one of the plates (5, 5') is interrupted by the filter element changing station (7), and that the filter element changing station (7) is constructed to be larger than one filter element (8) and smaller than or the same size as two filter elements (8, 8').

2. The molten materials filter as recited in claim 1,
**characterised in that**
at least one of the plates (5, 5') includes an area that covers the filter element changing station (7) and can be moved in reverse, that the strainer plate (3) is completely covered and closed flush with the strainer plate when filtering is active, and that the filter element changing station (7) is exposed for filter element changing:

3. The molten materials filter as recited in claim 1 or 2,
**characterised in that**
the respective distances between the filter elements (8) against which the molten material is forced and the filter element changing station (7) are the same size or greater than the combined width of one filter element (7) and a fin (11), and smaller than the combined width of two filter elements (8, 8') and a fin (11).

4. The molten materials filter as recited in claim 3,
**characterised in that**
the ratio of the fin area against which the molten material is forced to the area of the strainer plate (3) through which the molten material passes is less than 18% and greater than 12%.

5. The molten materials filter as recited in claim 4,
**characterised in that** the ratio of the fin area against which the molten material is forced to the area of the strainer plate (3) through which the molten material passes is between 14% and 16%.

6. The molten materials filter as recited in at least one of claims 3 to 5. **characterised in that** a maximum of 10% of the surface of the strainer plate (3) against which the molten material is forced can be replaced by a corresponding strainer plate area with unused filter elements (8) for each stroke of the ratchet drive (4).

7. The molten materials filter as recited in claim 6,
**characterised in that**
between 5% and 7% of the surface of the strainer plate (3) against which the molten material is forced can be replaced by a corresponding strainer plate area with unused filter elements (8) for each stroke of the ratchet drive (4).

## Revendications

1. Filtre pour masse fondue (1) pour la purification de masses de matière plastique fondue, notamment délivrées par des extrudeuses, avec un disque de tamisage (3) pouvant être entraîné en rotation au moyen d'un entraînement à cliquet (4) prévu entre deux platines (5, 5') formant un carter équipé d'un poste de changement d'élément de filtration (7), qui le long d'un trajet circulaire comporte des évidements séparés par des barrettes (11) pour le logement d'éléments de filtration interchangeables (8), qui par l'intermédiaire de disques perforés sont soutenus à l'encontre des forces exercées sur eux dans le sens d'écoulement de la masse de matière plastique fondue suite à la chute de pression qui se produit à l'intérieur d'eux et avec un conduit à masse fondue (9) traversant les platines (5, 5') dans la zone du trajet circulaire, alimentant les éléments de filtration (8) en masse fondue, s'évasant en direction des éléments de filtration (8),
**caractérisé en ce que**
les platines (5, 5') recouvrent entièrement le disque de tamisage (3), au moins l'une des platines (5, 5') étant interrompue par le poste de changement d'élément de filtration (7) et **en ce que** le poste de changement d'élément de filtration (7) est conçu pour être plus grand qu'un élément de filtration (8) et plus petit ou égal à la dimension de deux éléments de filtration (8, 8').

2. Filtre à masse fondue selon la revendication 1,
**caractérisé en ce que**
au moins l'une des platines (5, 5') comporte une zone mobile réversible, recouvrant le poste de changement d'élément de filtration (7), **en ce que** pendant le fonctionnement du filtre, le disque de tamisage (3) est totalement recouvert et fermé à fleur sur le disque de tamisage et **en ce que** le poste de changement d'élément de filtration (7) est libéré pour le changement d'élément de filtration.

3. Filtre à masse fondue selon la revendication 1 ou 2,
**caractérisé en ce que**
la distance respective entre des éléments de filtration (8) alimentés et le poste de changement d'élémént de filtration (7) est supérieure ou égale à l'extension en largeur d'un élément de filtration (8) et d'une barrette (11) et inférieure ou égale à l'extension en largeur de deux éléments de filtrations (8, 8') et une barrette (11).

4. Filtre à masse fondue selon la revendication 3,
**caractérisé en ce que**
le rapport de la surface de barrette alimentée à la surface traversée du disque de tamisage (3) est inférieur à 18 % et supérieur à 12 %.

5. Filtre à masse fondue selon la revendication 4,
**caractérisé en ce que**
le rapport de la surface de barrette alimentée à la surface traversée du disque de tamisage (3) se situe entre 14% et 16%.

6. Filtre à masse fondue selon au moins l'une quelconque des revendications 3 à 5, **caractérisé en ce que**,
par course de l'entraînement à cliquet (4), un maximum de 10 % de la surface du disque de tamisage (3) alimentée en masse de matière plastique fondue est interchangeable contre une surface correspondante de disque de tamisage avec des éléments de filtration (8) neufs.

7. Filtre à masse fondue selon la revendication 6,
**caractérisé en ce que**
par course de l'entraînement à cliquet (4), entre 5% et 7 % de la surface du disque de tamisage (3) alimentée en masse de matière plastique fondue est interchangeable contre une surface correspondante de disque de tamisage avec des éléments de filtration (8) neufs.
